# EUROPÄISCHE PATENTANMELDUNG

(11) **EP 1 998 040 A2**
(43) Veröffentlichungstag der Anmeldung: **03.12.2008**
(21) Anmeldenummer: 08005096.6
(22) Anmeldetag: 19.03.2008
(51) Int. Cl.: F03B 13/10, F03B 11/00

(54) **Antriebsstrang für eine tauchende Energieerzeugungsanlage**

(30) Priorität: 30.04.2007 DE 102007020615
(71) Anmelder: Voith Patent GmbH, 89522 Heidenheim (DE)
(72) Erfinder: Basteck, Andreas, Dr., 79540 Lörrach (DE); Ludas, Bernhard, 73434 Aalen (DE)
(74) Vertreter: Dr. Weitzel & Partner

(57) **Zusammenfassung**

Die Erfindung betrifft eine Energieerzeugungsanlage, angetrieben durch eine Gewässerströmung, umfassend
- eine Wasserturbine;
- einen elektrischen Generator;
- einen Antriebsstrang zwischen der Wasserturbine und dem elektrischen Generator.

Die Erfindung ist dadurch gekennzeichnet, dass
der Antriebsstrang eine regelbare hydrodynamische Kupplung zur ausschließlichen Übertragung von Leistung auf den elektrischen Generator aufweist.

## Beschreibung

Die Erfindung betrifft einen Antriebsstrang für eine tauchende Energieerzeugungsanlage, die von einer Gewässerströmung, insbesondere einer Meeresströmung, angetrieben wird. Ferner betrifft die Erfindung ein Betriebsverfahren für eine derartige Energieerzeugungsanlage.

Tauchende Energieerzeugungsanlagen stehen unabhängig von Dammstrukturen frei in einer Gewässerströmung. Dabei werden derartige Anlagen insbesondere zur Energiegewinnung aus Meeresströmungen und besonders bevorzugt zur Ausnutzung von Gezeitenströmungen verwendet. Wesentliche Komponenten einer solchen tauchenden Energieerzeugungsanlage stellen eine Wasserturbine und ein elektrischer Generator dar, die typischerweise in eine Gondel integriert beziehungsweise an dieser umlaufend ausgebildet sind. Die Gondel wird meist von an einer Tragstruktur befestigt, die entweder auf dem Gewässergrund fundamentiert ausgebildet ist oder von einer schwimmfähigen Einheit getragen wird, welche beispielsweise mittels eines Zugankersystems in Position gehalten wird.

In den meisten zur Energiegewinnung genutzten Gewässerströmungen treten Schwankungen der Strömungsverhältnisse auf. Ein solcher Wechsel in der Umgebungsströmung zur Verfügung stehenden kinetischen Energie ist insbesondere bei Meeresströmungen ausgeprägt. Beispielsweise tritt bei einer Gezeitenströmung ein zyklischer Verlauf der Strömungsgeschwindigkeit einschließlich einer Strömungsrichtungsumkehr auf. Darüber hinaus wird die mittlere Strömungsgeschwindigkeit durch nicht zu vernachlässigende Fluktuationen überlagert. Dieses zeitlich variable Leistungsangebot führt zu der Schwierigkeit, dass eine von der Umgebungsströmung angetriebene Wasserturbine eine variable Umlaufgeschwindigkeit aufweist und im einfachsten Fall zur Erzielung eines hohen Wirkungsgrades bei einer Direktverbindung zwischen einer Wasserturbine und einem elektrischen Generator der elektrische Generator frequenzvariabel auszubilden ist. Zur Netzaufschaltung und Drehzahlregelung werden daher typischerweise Frequenzumrichter verwendet, die wiederum störanfällige Leistungskomponenten der Maschine darstellen.

Daher wurde in der DE 10 2004 058 258 A1 vorgeschlagen, eine gattungsgemäße Energieerzeugungsanlage mit einem während des Normalbetriebs frequenzkonstant umlaufenden elektrischen Generators mit direkter Netzankopplung auszubilden. Zur Verbindung einer drehzahlvariablen Wasserturbine mit einem solchermaßen frequenzkonstanten elektrischen Generator wird in der genannten Druckschrift vorgeschlagen, einen leistungsverzweigten Antriebsstrang auszubilden, indem ein Leistungsverzweigungsgetriebe Leistung auf zwei Leistungszweige aufteilt, die abtriebsseitig mittels einer hydrodynamischen Komponente in Verbindung treten, die das Übersetzungsverhältnis des Leistungsverzweigungsgetriebes und das Verhältnis der Leistungsaufteilung zur Realisierung eines frequenzstarren Antriebs des elektrischen Generators anpasst.

Nachteilig an einer leistungsverzweigten Gestaltung eines Antriebsstrangs für eine gattungsgemäße, tauchende Energieerzeugungsanlage ist der hohe konstruktive Aufwand und die fehlende Möglichkeit zur Drehrichtungsumkehr. Zusätzlich bietet die durch die DE 10 2004 058 258 A1 offenbarte Lösung keine Möglichkeit beim Erreichen des Nennleistungsmaximums der Energieerzeugungsanlage eine Abriegelung über den Antriebsstrang selbst vornehmen zu können. Hierzu ist die Geometrie der Wasserturbine beziehungsweise deren Anstellwinkel relativ zur Strömung so zu verändern, dass die Energieaufnahme aus der Umgebungsströmung begrenzt ist. Im Fall einer propellerförmig ausgebildeten Wasserturbine wird zu diesem Zweck üblicherweise eine Pitchwinkelverstellung vorgenommen. Der mit dieser Maßnahme verbundene konstruktive und steuerungstechnische Aufwand ist jedoch im Hinblick auf eine ausfallsichere Anlagenauslegung vielfach unerwünscht und bewirkt eine kosten- und wartungsintensive Wasserturbinenkonstruktion.

Der Erfindung liegt die Aufgabe zugrunde, eine gattungsgemäß tauchende Energieerzeugungsanlage anzugeben, die sich durch eine einfache, robuste Konstruktion auszeichnet. Hierzu sollte der Antriebsstrang der Energieerzeugungsanlage so ausgebildet sein, dass auch bei zeitlich variablen Strömungsverhältnissen, insbesondere bei zyklischen Strömungen und dem Auftreten von Strömungsfluktuationen, ein drehzahlkonstanter Antrieb eines elektrischen Generators und dessen direkte Netzaufschaltung ermöglicht wird. Darüber hinaus ist eine Energieerzeugungsanlage anzugeben, die vom Stillstand bis zum netzsynchronen Betrieb geführt werden kann und die ohne eine Veränderung der Geometrie beziehungsweise des Anstellwinkels der Wasserturbine zur Umgebungsströmung für den Fall des Erreichens des Nennleistungsmaximums eine Abriegelung ermöglicht.

Zur Lösung der voranstehend genannten Aufgabe haben die Erfinder erkannt, dass zwischen der Wasserturbine und dem elektrischen Generator eine regelbare hydrodynamische Kupplung zur Übertragung des Leistungsflusses zwischenzuschalten ist. Eine hydrodynamische Kupplung umfasst wenigstens ein Primärrad, das als Pumpenrad verwendet wird, und wenigstens ein Sekundärrad, das als Turbinenrad bezeichnet wird und auf welches der Momentenübertrag erfolgt. Eine hydrodynamische Kupplung weist kein Leitrad auf, so dass die im torusförmigen Arbeitsraum der hydrodynamischen Kupplung umgewälzte Toroidströmung des Arbeitsmediums ein Reaktionsmoment auf das Sekundärrad überträgt, das aufgrund des Momentengleichgewichts dem vom Primärrad aufgebrachten Moment entspricht. Das Primärrad weist gegenüber dem Sekundärrad stets eine höhere Drehzahl auf, da zur Momentenübertragung ein bestimmter Schlupf in der hydrodynamischen Kupplung notwendig ist. Dabei lässt sich das von der hydrodynamischen Kupplung in Abhängigkeit des vorliegenden Schlupfs übertragbare Moment in einem Kennlinienfeld für die Leistungszahl λ ermitteln. Die Leistungszahl λ hängt wiederum vom Füllungsgrad der hydrodynamischen Kupplung mit Arbeitsmedium ab, wodurch deren Regelbarkeit realisiert wird.

Bevorzugt erfolgt der Antrieb der regelbaren hydrodynamischen Kupplung durch die Wasserturbine mittelbar, das heißt für den effizienten Betrieb der hydrodynamischen Kupplung wird eine Übersetzungsstufe mit einem starren Übersetzungsverhältnis im Antriebsstrang zwischen der Wasserturbine und der regelbaren hydrodynamischen Kupplung vorgesehen.

Die regelbare hydrodynamische Kupplung wird gemäß einer bevorzugten Ausgestaltung mit einer geraden Beschaufelung versehen. Dies ermöglicht den Umlauf der hydrodynamischen Kupplung in beide Drehrichtungen. Damit ist es möglich, die Wasserturbine ebenfalls in beide Richtungen umlaufen zu lassen, wodurch sich die Möglichkeit eröffnet, die Energieerzeugungsanlage mit einer nicht nachgeführten Wasserturbine auszubilden und dennoch Energie aus einer richtungsvariablen Anströmung, insbesondere aus einer Gezeitenströmung mit einem Strömungsrichtungswechsel um 180° zu entnehmen. Allerdings ist es für diesen Fall notwendig, die Geometrie der Wasserturbine so zu gestalten, dass eine Anströmung aus unterschiedlichen Richtungen möglich ist und sich lediglich aufgrund eines Strömungsrichtungswechsels der Drehsinn der Wasserturbine ändert.

Gemäß einer alternativen Ausgestaltung wird die regelbare hydrodynamische Kupplung mit einer schrägen Beschaufelung versehen. Dies ist im Hinblick auf einen höheren Wirkungsgrad im Vergleich zu einer geraden Beschaufelung von Vorteil. Zusätzlich reduziert sich der Einfluss des Kurzschlussmoments vom elektrischen Generator auf den Antriebsstrang. Allerdings kann für diesen Fall die Wasserturbine lediglich in einer Drehrichtung betrieben werden, sodass für einen Wechsel in der Anströmungsrichtung eine Nachführung der Energieerzeugungsanlage vorgesehen sein muss.

Im Normalbetriebszustand eines starr auf das elektrische Netz aufgeschalteten, frequenzkonstanten elektrischen Generators erfolgt über das elektrische Netz eine Stützung der im Wesentlichen konstanten Umlaufdrehzahl des elektrischen Generators, sodass je nach Leistungszufuhr zum elektrischen Generator das vom erfindungsgemäßen Antriebsstrang übertragene Moment und damit der Schlupf der hydrodynamischen Kupplung variiert. Hierdurch ist es möglich, Momentenstöße, die durch Fluktuationen der Strömungsgeschwindigkeit in der Gewässerströmung entstehen, abzufedern, wobei die hydrodynamische Kupplung die dem System innewohnende Trägheit zusätzlich erhöht.

Durch die Anpassung des Füllungsgrads des Arbeitsmediums in der regelbaren hydrodynamischen Kupplung kann das Drehzahlverhältnis zwischen der Primär- und der Sekundärseite in Abhängigkeit des von der Wasserturbine aufgenommenen Moments angepasst werden. Dabei ist es möglich, durch eine gezielte Anpassung der Umlaufdrehzahl der Wasserturbine bei einer vorgegebenen Geschwindigkeit der Umgebungsströmung deren Leistungseintrag anzupassen. Nachfolgend wird dies anhand eines bevorzugten Betriebsverfahrens zur Leistungsabriegelung im Fall des Erreichens des Nennleistungsmaximums der Energieerzeugungsanlage dargelegt.

Mit zunehmender Leistungsaufnahme wird die Drehzahl der Wasserturbine zu höheren Werten verschoben. Gleichzeitig steigt das mittels der regelbaren hydrodynamischen Kupplung an den elektrischen Generator übertragene Moment an, bis ein vorgegebener Grenzwert für die Energieerzeugungsanlage erreicht wird, der nachfolgend als Nennleistungsmaximum bezeichnet wird. Erfindungsgemäß wird die Energieerzeugungsanlage für diesen Fall dadurch abgeriegelt, dass ein Teil des Arbeitsmediums aus der regelbaren hydrodynamischen Kupplung entnommen wird und so aufgrund des veränderten Füllungsgrads im Kennlinienfeld für die Leistungszahl λ ein Drehzahl- und Momentensprung ausgeführt wird, das heißt, das von der hydrodynamischen Kupplung übertragene Moment folgt einer veränderten Abhängigkeit zum Schlupf. Hierdurch wird sich primärseitig eine höhere Drehzahl einstellen und aufgrund der schneller drehenden Wasserturbine ein veränderter Leistungsbeiwert derselben resultieren. Wird nun die Umlaufgeschwindigkeit der Wasserturbine so weit erhöht, dass der Bereich eines abfallenden Leistungsbeiwerts der Wasserturbine erreicht wird, so folgt eine Verringerung der Leistungsaufnahme der Wasserturbine aus der Umgebungsströmung und damit der gewünschte Abriegelungseffekt durch die Wasserturbine.

Eine weitere Ausführung eines erfindungsgemäßen Betriebsverfahrens, bei dem mittels der Regelung der hydrodynamischen Kupplung über eine Steuerung des Füllungsgrads eine Beeinflussung der Umlaufgeschwindigkeit der Wasserturbine und/oder der Drehzahl des elektrischen Generators vorgenommen wird, betrifft das Anfahren der Energieerzeugungsanlage aus dem Stillstand bis zur Synchronisation und der Netzaufschaltung. Hierzu wird aus dem Stillstand oder aus dem Langsamlauf zunächst mit einer im Wesentlichen entleerten hydrodynamischen Kupplung die Wasserturbine sowie das bevorzugt zwischen der Wasserturbine und der regelbaren hydrodynamischen Kupplung vorgesehene Getriebe mit fester Übersetzung auf Drehzahl gebracht. Ist dies vollzogen, erfolgt eine gesteuerte oder geregelte Füllung der hydrodynamischen Kupplung mit Arbeitsmedium, sodass auch die auf der Sekundärseite der hydrodynamischen Kupplung nachfolgenden Komponenten, das heißt insbesondere der elektrische Generator, ebenfalls hochläuft. Durch eine Anpassung des Füllungsgrads in der regelbaren hydrodynamischen Kupplung wird die Umlaufdrehzahl des Generators so eingestellt, dass im Fall eines Synchrongenerators ein leicht übersynchroner Betrieb auf der Seite der Wasserturbine realisiert wird. Asynchrone Generatoren erfordern eine andere Regelungsstrategie. Nachfolgend wird der elektrische Generator auf das Netz aufgeschaltet, wobei diese Aufschaltung im Falle eines Synchrongenerators bei einer hinreichend kleinen Phasenwinkelabweichung erfolgt.

Nachfolgend wird die Erfindung durch die Darstellung bevorzugter Ausgestaltungen und anhand von Figurendarstellungen genauer erläutert. In den Figuren ist im Einzelnen Folgendes dargestellt:
- Figur 1: zeigt skizzenhaft vereinfacht einen Antriebsstrang einer gattungsgemäßen Energieerzeugungsanlage mit einer regelbaren hydrodynamischen Kupplung zur Übertragung des Leistungsflusses von der Wasserturbine zum elektrischen Generator.
- Figur 2: zeigt anhand eines Drehzahl-/Leistungsdiagramms das erfindungsgemäße Betriebsverfahren zur Abriegelung der Energieerzeugungsanlage im Fall des Erreichens des Nennleistungsmaximums.
- Figur 3: zeigt schematisch vereinfacht den Verlauf des Leistungsbeiwerts der Wasserturbine im Verhältnis zur Drehzahl.

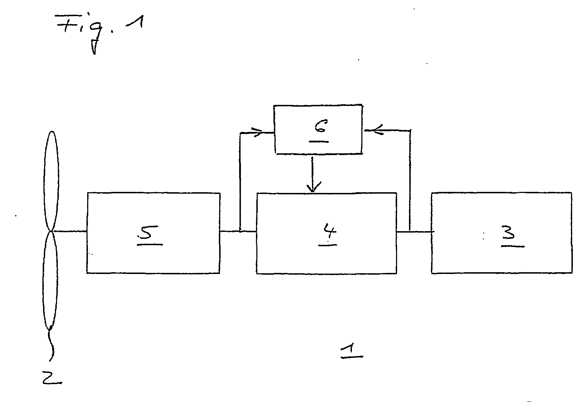

In der Figur 1 ist schematisch vereinfacht der Aufbau des Antriebsstrangs 1 einer erfindungsgemäßen Energieerzeugungsanlage dargestellt. Mit dem Bezugszeichen 2 wird eine Wasserturbine bezeichnet, diese kann beispielsweise propellerförmig ausgebildet sein. Die Wasserturbine 2 treibt mittelbar einen elektrischer Generator 3 an. Dies kann entweder ein Synchrongenerator oder ein Asynchrongenerator sein. Die Polanzahl ist auf die gewählte, während des Normalbetriebs konstante Drehzahl des elektrischen Generators 3 angepasst. Im vorliegenden Fall wird beispielsweise mit einer sechspoligen Maschine gearbeitet. Erfindungsgemäß wird zur Leistungsübertragung im Antriebsstrang 1 zwischen der Wasserturbine 2 und dem elektrischen Generator 3 eine regelbare hydrodynamische Kupplung 4 zwischengeschaltet. Die Regelung erfolgt über die Anpassung des Füllungsgrads mit Arbeitsmedium im Arbeitsraum der regelbaren hydrodynamischen Kupplung 4. Die Vorrichtungen zur Einstellung des Füllungsgrads können im Rahmen des fachmännischen Könnens ausgestaltet sein, beispielsweise werden hierzu Schöpfrohre oder Ventile verwendet, diese sind im Einzelnen nicht in Figur 1 dargestellt. Zur Anpassung des Füllungsgrads der regelbaren hydrodynamischen Kupplung 4 ist eine Steuerungs-/Regelungseinheit 6 vorgesehen. Gemäß einer bevorzugten Ausgestaltung werden dieser wenigstens eine erste Kenngröße zugeleitet, die die Umlaufgeschwindigkeit der Wasserturbine 2 charakterisiert sowie eine zweite Kenngröße, aus der die Drehzahl des elektrischen Generators abgeleitet werden kann.

Gemäß einer bevorzugten Ausgestaltung ist für den effizienten Betrieb der regelbaren hydrodynamischen Kupplung 4 zwischen der typischerweise langsam laufenden Wasserturbine 2 und der Kupplung ein Getriebe 5 mit einem festen Übersetzungsverhältnis zwischengeschaltet. Für die vorliegende Ausgestaltung wird hierdurch die Drehzahl der Wasserturbine um einen Faktor im Bereich von 80 - 100 erhöht. In Abhängigkeit der Systemauslegung kann auch eine andere Übersetzung gewählt werden, insbesondere eine noch größere, um die hydrodynamische Kupplung 4 effizient betreiben zu können.

Die regelbare hydrodynamische Kupplung 4 kann eine gerade Beschaufelung aufweisen. Dies führt zum Vorteil, dass ein Umlauf in beide Drehrichtungen möglich ist, sodass entsprechend die Wasserturbine 2 in unterschiedliche Drehrichtungen angetrieben werden kann. Für den alternativen Fall, dass die Wasserturbine 2 nur in eine Richtung umläuft, beispielsweise wenn keine wesentliche Richtungsänderung der Umgebungsströmung vorliegt oder die Wasserturbine mit der Strömung nachgeführt wird, kann für die regelbare hydrodynamische Kupplung eine schräge Beschaufelung vorgesehen sein, was den Wirkungsgrad erhöht.

Die Verwendung einer regelbaren hydrodynamischen Kupplung 4 erlaubt die Dämpfung von Momentenstößen, die durch Fluktuation der Umgebungsströmung von der Wasserturbine 2 aufgenommen werden. Zugleich trägt die regelbare hydrodynamische Kupplung zur Schwingungsdämpfung des elektrischen Generators bei. Schwingungen können hierbei wiederum über den Antriebsstrang 1 oder von der Netzseite, beispielsweise über ein Netzflickern, angeregt werden.

Der erfindungsgemäße Antriebsstrang 1 erlaubt einen frequenzkonstanten Betrieb des elektrischen Generators bei gleichzeitiger variabler Umlaufgeschwindigkeit der Wasserturbine. Dies wird durch eine Veränderung des Schlupfs und damit des primär- zu sekundärseitigen Drehzahlverhältnisses aufgrund einer Änderung des von der regelbaren hydrodynamischen Kupplung 4 übertragenen Moments bewirkt. Dies betrifft somit gemäß eines ersten Falls eine während des Normalbetriebs auf einen bestimmten Füllungsgrad eingestellte regelbare hydrodynamische Kupplung 4, die im Kennlinienfeld der λ-Werte einen bestimmten Verlauf des Schlupf-zu-Drehmomentverhältnisses folgt. Zusätzlich kann durch eine Regelung oder Steuerung des Füllungsgrads des Arbeitsraums mit Arbeitsmedium der regelbaren hydrodynamischen Kupplung 4 ein Übergang zwischen unterschiedlichen λ-Kennlinien vorgenommen werden. Dies ist insbesondere für Betriebsverfahren notwendig, bei denen besondere Betriebssituationen vorliegen. Nachfolgend wird dies anhand von zwei Beispielen betreffend die Synchronisation und die Abriegelung einer erfindungsgemäßen Energieerzeugungsanlage dargelegt.

Ausgehend von einer Energieerzeugungsanlage mit einem stillstehenden elektrischen Generator 3 und einer entleerten hydrodynamischen Kupplung 4 im Antriebsstrang 1 wird zunächst die Wasserturbine und die weiteren primärseitig zur regelbaren hydrodynamischen Kupplung 4 angeordneten Komponenten, beispielsweise das Getriebe mit fester Übersetzung 5, auf Drehzahl gebracht. Bis zum Erreichen einer Nenndrehzahl (übersynchron gegenüber Generator) wird mit einer entleerten hydrodynamischen Kupplung 4 oder einer geringen Teilfüllung gearbeitet. Nachdem Hochlaufen der Wasserturbine 2 erfolgt die geregelte oder gesteuerte Befüllung der regelbaren hydrodynamischen Kupplung 4, wobei mittels der Steuerungs-/Regelungseinheit 6 eine solche Führung des Befüllungsgrads vorgegeben wird, dass die Drehzahl auf der Welle des elektrischen Generators 3 so lange hochgefahren wird, bis eine Umlaufgeschwindigkeit erreicht wird, die im Fall eines Synchrongenerators einem annähernd synchronen Betrieb und im Fall eines Asynchrongenerators annähernd einer Umlaufgeschwindigkeit entspricht, die zur Frequenz des elektrischen Netzes korrespondiert. Sodann erfolgt eine Zuschaltung des elektrischen Generators, wobei bevorzugt im Fall von Synchrongeneratoren zugleich eine Minimierung der Phasenwinkelabweichung vor der Zuschaltung vorgenommen wird.

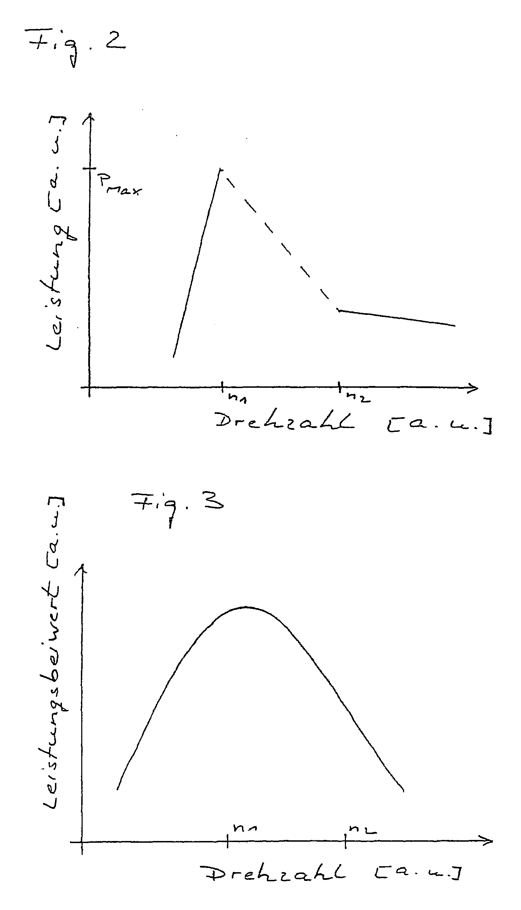

Für eine weitere vorteilhafte Betriebsführung wird nachfolgend der Fall eines hohen Lasteintrags bis zur vorgegebenen Grenze des Nennleistungsmaximums für die Energieerzeugungsanlage betrachtet. Hierzu ist in Figur 2 der Verlauf der Leistungsaufnahme für die Wasserturbine 2 im Verhältnis zur Drehzahl skizziert.

Bis zur Drehzahl n₁ erfolgt ein erwünschter Leistungsanstieg bis das vorgegebene Nennleistungsmaximum P_{Max} erreicht wird und eine Abriegelung der Energieerzeugungsanlage notwendig ist. Erfindungsgemäß wird hierzu keine Veränderung an der Wasserturbine 2 oder ihrer Angriffsstellung zur Strömung vorgenommen. Stattdessen wird mittels der erfindungsgemäß im Antriebsstrang 1 verwendeten regelbaren hydrodynamischen Kupplung 4 eine Abriegelung erreicht. Hierzu wird die hydrodynamische Kupplung 4 teilentleert, sodass im λ-Kennfeld eine Verschiebung auf eine andere Kennlinie für das Drehmoment-SchlupfVerhältnis folgt. Dieser Sprung in der Kennliniencharakteristik führt zu einer Erhöhung der Drehzahl. In Figur 2 ist hierzu exemplarisch die Drehzahl n₂ gezeigt sowie ein gestrichelter Kurvenverlauf zwischen der Drehzahl n₁, die dem ersten Befüllungsstand und dem Nennleistungsmaximum P_{Max} zugeordnet ist, und der Drehzahl n₂. Anders ausgedrückt, bedeutet dies, dass die Wasserturbine 2 auf eine höhere Drehzahl zur Abriegelung beschleunigt, wobei die höhere Drehzahl so gewählt ist, dass ein Bereich im Leistungsbeiwert-Diagramm der Wasserturbine erreicht wird, indem die Leistungsaufnahme verringert ist. Dies ist in Figur 3 skizziert.

Wiederum sind die exemplarisch gewählten Drehzahlen aus Figur 2 n₁ und n₂ dargestellt, wobei ersichtlich ist, dass der Drehzahl n₁ ein höherer Leistungsbeiwert zugeordnet wird als der größeren Drehzahl n₂, das heißt, zur Abriegelung wird die Wasserturbine 2 in einen Umlaufgeschwindigkeitsbereich geführt, in dem sie weniger effizient der Umgebungsströmung kinetische Energie entnehmen kann. Als Folge sinkt, wie erwünscht, der Leistungseintrag in den erfindungsgemäßen Antriebsstrang 1.

Eine Weitergestaltung der Erfindung im Rahmen des fachmännischen Könnens ist denkbar, wobei es insbesondere möglich ist, primärseitig und/oder sekundärseitig zur regelbaren hydrodynamischen Kupplung 4 im Antriebsstrang 1 der erfindungsgemäßen Energieerzeugungsanlage weitere Komponenten zur Leistungsübertragung vorzusehen. Dies können Getriebekomponenten mit fester Übersetzung sein oder weitere hydrodynamische Komponenten. Darüber hinaus ist es möglich, mehr als eine hydrodynamische Kupplung 4 im Antriebsstrang zu verwenden und diese im Wechsel je nach Leistungsbereich oder parallel zu betreiben.

### Bezugszeichenliste

- 1: Antriebsstrang
- 2: Wasserturbine
- 3: elektrischer Generator
- 4: regelbare hydrodynamische Kupplung
- 5: Übersetzungsgetriebe mit konstantem Übersetzungsverhältnis
- 6: Steuerungs-/Regelungseinheit

## Patentansprüche

1. Energieerzeugungsanlage, angetrieben durch eine Gewässerströmung, umfassend
1.1 eine Wasserturbine (2);
1.2 einen elektrischen Generator (3);
1.3 einen Antriebsstrang (1) zwischen der Wasserturbine (2) und dem elektrischen Generator (3);
**dadurch gekennzeichnet, dass**
1.4 der Antriebsstrang (1) eine regelbare hydrodynamische Kupplung (4) zur ausschließlichen Übertragung von Leistung auf den elektrischen Generator (3) aufweist.

2. Energieerzeugungsanlage nach Anspruch 1, **dadurch gekennzeichnet, dass** die regelbare hydrodynamische Kupplung (4) durch die Einstellung des Füllungsgrads des Arbeitsmediums in der hydrodynamischen Kupplung (4) geregelt wird.

3. Energieerzeugungsanlage nach einem der Ansprüche 1 oder 2, **dadurch gekennzeichnet, dass** zwischen der Wasserturbine (2) und der regelbaren hydrodynamischen Kupplung (4) ein Getriebe mit einem starren Übersetzungsverhältnis zwischengeschaltet ist.

4. Energieerzeugungsanlage nach wenigstens einem der Ansprüche 1-3, **dadurch gekennzeichnet, dass** das Sekundärrad der regelbaren hydrodynamischen Kupplung (4) direkt mit der Antriebswelle des elektrischen Generators (3) verbunden ist.

5. Energieerzeugungsanlage nach wenigstens einem der Ansprüche 1-4, **dadurch gekennzeichnet, dass** während des Normalbetriebs der elektrische Generator (3) drehzahlkonstant angetrieben wird und direkt auf ein elektrisches Netz aufgeschaltet ist.

6. Energieerzeugungsanlage nach wenigstens einem der Ansprüche 1-5, **dadurch gekennzeichnet, dass** der regelbaren hydrodynamischen Kupplung (4) eine Steuerungs-/Regelungseinheit (6) zugeordnet ist, die die Umlaufgeschwindigkeit der Wasserturbine (2) und/oder die Drehzahl des elektrischen Generators (3) durch eine Anpassung des Füllungsgrads der regelbaren hydrodynamischen Kupplung (4)mit Arbeitsmedium steuert oder regelt.

7. Energieerzeugungsanlage nach wenigstens einem der Ansprüche 1-6, **dadurch gekennzeichnet, dass** die regelbare hydrodynamische Kupplung (4) eine gerade Beschaufelung aufweist und die Wasserturbine (2) von der Umgebungsströmung in beide Drehrichtungen angetrieben werden kann.

8. Energieerzeugungsanlage nach wenigstens einem der Ansprüche 1-7, **dadurch gekennzeichnet, dass** die regelbare hydrodynamische Kupplung (4) eine schräge Beschaufelung aufweist.

9. Energieerzeugungsanlage nach Anspruch 8, **dadurch gekennzeichnet, dass** die Wasserturbine (2) bei einer Änderung der Anströmungsrichtung nachgeführt wird.

10. Verfahren zum Betrieb einer Energieerzeugungsanlage, umfassend eine Wasserturbine (2) zur Aufnahme kinetischer Energie aus eine Umgebungsströmung, die einen elektrischen Generator (3) mittelbar antreibt, wobei zwischen der Wasserturbine (2) und dem elektrischen Generator (3) eine regelbare hydrodynamische Kupplung (4) zur ausschließlichen Leistungsübertragung zwischengeschaltet ist, umfassend den Verfahrensschritt einer Anpassung der Umlaufgeschwindigkeit der Wasserturbine (2) und/oder der Drehzahl des elektrischen Generators (3) durch eine Steuerung oder Regelung des Füllungsgrads der regelbaren hydrodynamischen Kupplung (4) mit Arbeitsmedium.

11. Verfahren nach Anspruch 10, **dadurch gekennzeichnet, dass** beim Anfahren der Energieerzeugungsanlage aus dem Stillstand zunächst mit einer wenigstens teilweise entleerten regelbaren hydrodynamischen Kupplung (4) die Wasserturbine (2) und der primärseitige Antriebsstrang auf eine vorgegebene Drehzahl hochgefahren wird; nach dem Erreichen der vorgegebenen primärseitigen Drehzahl erfolgt eine Teilfüllung der regelbaren hydrodynamischen Kupplung (4) mit Arbeitsmedium, wodurch der elektrische Generator (3) hochgefahren und mittels einer Füllungsgradssteuerung der regelbaren hydrodynamischen Kupplung auf die Synchronsationsdrehzahl gebracht wird, gefolgt von einer Zuschaltung des elektrischen Generators (3) zum elektrischen Netz.

12. Verfahren nach Anspruch 10, **dadurch gekennzeichnet, dass** beim Erreichen eines Nennleistungsmaximums der Energieerzeugungsanlage eine Verringerung des Füllungsgrads der regelbaren hydrodynamischen Kupplung (4) mit Arbeitsmedium vorgenommen wird, sodass mit zunehmendem Schlupf in der regelbaren hydrodynamischen Kupplung (4) eine Erhöhung der Umlaufgeschwindigkeit der Wasserturbine (2) bis zu einem Bereich eines abfallenden Leistungsbeiwerts folgt.
